# NEUE EUROPÄISCHE PATENTSCHRIFT

(11) **EP 2 645 037 B2**
(45) Veröffentlichungstag und Bekanntmachung des Hinweises auf die Entscheidung über den Einspruch: **17.04.2019**
(45) Hinweis auf die Patenterteilung: 22.07.2015
(21) Anmeldenummer: 12004194.2
(22) Anmeldetag: 31.05.2012
(51) Int. Cl.: B23P 15/26, F28F 3/08, F28D 9/00, F25J 5/00

(54) **Plattenwärmeaustauscher mit mehreren Modulen verbunden durch Blechstreifen**
Plate heat exchanger with multiple modules connected with metal strips
Échangeur thermique à plaques avec plusieurs modules liés par un ruban de tôle

(30) Priorität: 29.03.2012 DE 102012006483
(43) Veröffentlichungstag der Anmeldung: 02.10.2013
(73) Patentinhaber: Linde Aktiengesellschaft, 80331 München (DE)
(72) Erfinder: Dietrich, Jörg, 83533 Erding (DE); Hölzl, Reinhold, Dr., 82538 Geretsried (DE)

(56) Entgegenhaltungen:
- EP-A1- 1 087 194
- EP-A1- 1 329 680
- DE-A1-102009 033 661
- FR-A1- 2 665 755

## Beschreibung

Die Erfindung betrifft einen Plattenwärmetauscher, bestehend aus
- mindestens zwei Modulen, wobei jedes Modul eine Vielzahl stapelförmig angeordneter Passagen aufweist, welche alternierend von wärmeaustauschenden Medien durchströmt werden können und durch Trennbleche voneinander getrennt sind,
- die Module insgesamt quaderförmig sind und an den Außenseiten durch Deckbleche begrenzt werden,
- die Module derart nebeneinander angeordnet sind, das eine rechteckige Seite eines quaderförmigen Moduls einer entsprechenden rechteckigen Seite eines anderen quaderförmigen Moduls unmittelbar benachbart ist,
- die Module Mittel zur Zu- und Abführung der wärmeaustauschenden Medien sowie Mittel (Header) zum Verteilen und Sammeln der wärmeaustauschenden Medien auf bzw. aus den einzelnen Passagen aufweisen und
- wobei mindestens zwei Module mindestens einen gemeinsamen Header aufweisen,
sowie ein Verfahren zu dessen Herstellung.
EP 1 471 322 A1 offenbart einen derartigen Plattenwärmetauscher.

Hartgelötete Plattenwärmetauscher aus Aluminium werden in zahlreichen Anlagen bei verschiedensten Drücken und Temperaturen eingesetzt. Sie finden beispielsweise Anwendung bei der Zerlegung von Luft, der Verflüssigung von Erdgas oder in Anlagen zur Herstellung von Ethylen.

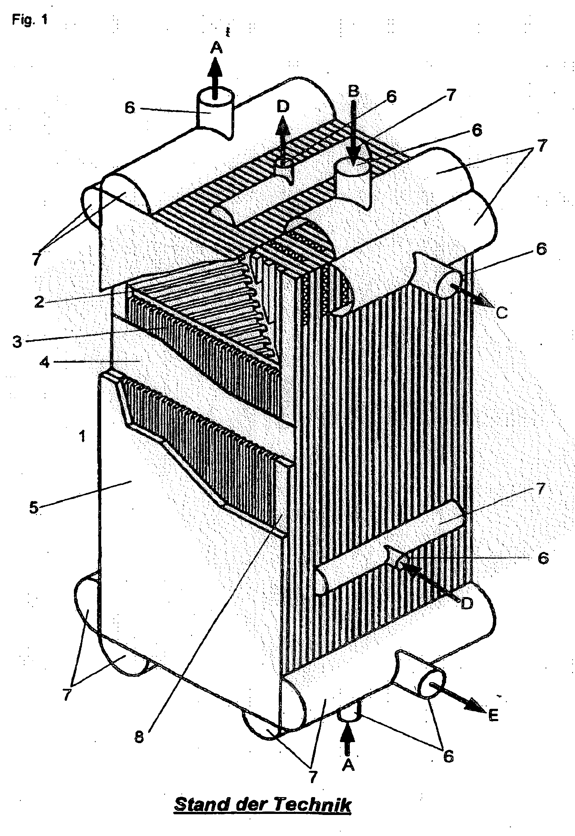

Ein derartiger Plattenwärmetauscher wird beispielsweise in "The standards of the brazed aluminium plate-fin heat exchanger manufactures association" ALPEMA report (2000) beschrieben. Eine daraus entnommene Abbildung wird in der Figur 1 als Stand der Technik dargestellt und im Folgenden beschrieben.

Der in Figur 1 dargestellte Plattenwärmetauscher 1 dient dem Wärmeaustausch fünf verschiedener Prozessströme A, B, C, D und E. Der Wärmetauscher 1 ist blockförmig und mit verschiedensten Mitteln 6 zur Zu- und Abführung der einzelnen Prozessmedien ausgestattet. Diese Mittel 6 werden im Folgenden und im Rahmen dieser Anmeldung als Stutzen bezeichnet. Der Wärmetauscher weist ebenfalls mehrere Mittel 7 zum Verteilen und Sammeln der einzelnen Prozessströme A, B, C, D und E auf, welche im Folgenden und im Rahmen dieser Anmeldung als Header bezeichnet werden.

Im Wesentlichen besteht der Plattenwärmetauscher 1 aus einer Vielzahl stapelförmig angeordneter Passagen 3, die durch Trennbleche 4 voneinander getrennt sind. In den einzelnen Passagen 3 strömen die verschiedenen Medien. Der Wärmeaustausch erfolgt indirekt über den Wärmekontakt, der durch die Deckbleche 5 und durch die in den Passagen angeordnete wellenförmige Struktur (im Folgenden und im Rahmen dieser Anmeldung als Fins bezeichnet) hergestellt wird. Über die Stutzen 6 werden die einzelnen Medien A, B, C, D und E in die Header 7 geführt und so auf die jeweils vorgesehenen, stapelförmig angeordneten Passagen 3 verteilt. Im Eingangsbereich der Passagen befinden sich sogenannte Verteilerfins 2, die für eine gleichmäßige Verteilung des Mediums innerhalb der einzelnen Passagen 3 sorgen. Die Medien strömen somit quer zur Wellenrichtung der Fins 2 durch die Passagen 3. Die Fins 2 sind mit den Trennblechen 4 verbunden, wodurch ein intensiver Wärmeleitkontakt hergestellt wird. Dadurch kann ein Wärmeaustausch zwischen zwei verschiedenen Medien erfolgen, die in benachbarten Passagen 3 strömen. In Strömungsrichtung gesehen am Ende der Passage befinden sich ähnliche Verteilerfins 2, die die Medien aus den Passagen in die Header 7 führen, wo sie gesammelt und über den Stutzen 6 abgezogen werden. Die einzelnen Passagen 3 sind durch sogenannte Sidebars 8 nach außen abgeschlossen. Der gesamte Wärmetauscherblock wird durch Deckbleche 5 nach außen begrenzt.

Derartige Plattenwärmetauscher sind hervorragend zum Wärmeaustausch von mindestens 2 Medien geeignet. Durch geeignete Konstruktion können jedoch, wie in Figur 1 dargestellt, auch mehr als 2 Medien am Wärmeaustausch teilnehmen. Dies erlaubt eine sehr effektive Prozessführung und effektive Wärme- bzw. Kälteausnutzung.

Derartige Plattenwärmetauscher werden beispielsweise aus Aluminium hartgelötet. Die einzelnen Passagen mit den Fins, Verteilerfins, Deckblechen und Sidebars werden aufeinander gestapelt, mit Lot versehen und in einem Ofen hartgelötet. Auf den dadurch entstanden Block werden dann Header und Stutzen aufgeschweißt.

Durch das eben beschriebene Herstellungsverfahren wird durch die Größe und Geometrie des Lötofens auch die maximale Größe eines derartigen Plattenwärmetauscherblockes vorgegeben. Oft erfordern jedoch die Prozesserfordernisse größere Wärmeaustauschfläche und somit größere Wärmetauscherblöcke. Um diesen Anforderungen gerecht zu werden, bestehen Plattenwärmetauscher nach dem Stand der Technik in derartigen Fällen aus mindestens zwei Modulen. Unter einem Modul wird im Rahmen dieser Anmeldung ein Wärmetauscherblock verstanden, der in einem Lötofen wie eingangs beschrieben hergestellt wird. Mehrere derartige Module werden nach dem Stand der Technik miteinander verbunden und mit gemeinsamen Headern zur Verteilung und Sammlung der am Wärmeaustausch teilnehmenden Medien ausgestattet. Die Verbindung zwischen zwei verschiedenen Modulen eines Plattenwärmetauschers erfolgt dabei nach dem Stand der Technik über Sidebars.

Der in Figur 1 dargestellte Plattenwärmetauscher nach dem Stand der Technik besteht aus einem Modul. Um einen Plattenwärmetauscher mit mehreren Modulen herzustellen, wird ein Wärmetauscherblock wie in Figur 1 dargestellt, d.h. ohne Header und Stutzen, und mit einem zweiten derartigen Wärmetauscherblock verschweißt. Auf dem Deckblech 5 werden entlang der Kanten des Deckbleches Sidebars aufgeschweißt. Das zweite Modul, das mit dem ersten Modul verbunden werden soll, wird derart angeordnet, dass die beiden unmittelbar benachbarten Seiten der beiden Module jeweils gleiche Deckbleche haben. Die Fläche, die durch ein Deckblech gebildet wird, das einem weiteren Modul unmittelbar benachbart ist, wird im Folgenden als Kontaktfläche bezeichnet. Zur Verbindung wird das Deckblech mit den Sidebars auf dem Deckblech des unmittelbar benachbarten Moduls verschweißt. Die Sidebars bilden daher nach dem Stand der Technik quasi einen Rahmen auf dem Deckblech. Dieser Rahmen wird mit dem Deckblech des benachbarten Moduls verschweißt und derart eine Verbindung zwischen zwei Modulen hergestellt. Die beiden verbundenen Module bilden dadurch einen neuen Wärmetauscherblock, welcher größer ist, als die eigentliche Geometrie des Lötofens erlaubt. Auf diese Weise können beliebig viele Module miteinander zu einem beliebig großen Wärmetauscherblock verbunden werden. Dabei weisen zwei benachbarte Module mindestens einen gemeinsamen Header auf.

Zwischen zwei Modulen eines derartigen Plattenwärmetauschers bildet sich somit zwischen den Deckblechen eine Luftschicht aus, die dadurch quasi eine nichtdurchströmte und nicht am Wärmeaustausch teilnehmende sowie nicht drucktragende Passage bildet. Entsprechend ist der thermische Kontakt zwischen zwei Modulen deutlich schlechter als der thermische Kontakt innerhalb eines Moduls. Dies führt zu thermischen Spannungen eines Plattenwärmetauschers mit mindestens zwei Modulen in verschiedenen Anwendungen.

Der vorliegenden Erfindung liegt die Aufgabe zugrunde, einen Plattenwärmetauscher mit mindestens zwei Modulen, wie vorangegangen beschrieben, derart auszugestalten, dass eine möglichst starre und feste Verbindung zwischen zwei unmittelbar benachbarten Modulen hergestellt wird. Kräfte, zum Beispiel entstehend durch thermische Spannungen zwischen zwei Modulen, sollen minimiert und die mechanische Festigkeit des gesamten, aus mindestens zwei Modulen bestehenden, Blockes soll erhöht werden.

Die gestellte Aufgabe wird durch einen Plattenwärmetauscher mit den Merkmalen des unabhängigen Anspruches 1 gelöst. Verfahrensseitig wird die gestellte Aufgabe durch ein Verfahren, wie im Anspruch 9 beschrieben, gelöst.

Erfindungsgemäß werden die beiden Deckbleche, die die jeweils unmittelbar benachbarten Seiten zweier benachbarter Module bilden, im Folgenden als Kontaktflächen bezeichnet, über einen geeigneten Kleber miteinander verbunden. Die erfindungsgemäße Verbindung der Kontaktflächen über einen geeigneten Kleber gewährleistet eine deutlich flächigere Verbindung als im Stand der Technik. Bei einem Plattenwärmetauscher nach dem Stand der Technik sind die Kontaktflächen zweier benachbarter Module nur an den jeweiligen Kanten der Fläche über Sidebars miteinander verbunden. Die Kontaktflächen eines Plattenwärmetauschers nach dem Stand der Technik weisen keine Verbindungen im Zentrum der Kontaktflächen auf. Dieser Nachteil des Standes der Technik wird durch den erfindungsgemäßen Plattenwärmetauscher, bei dem die Kontaktflächen über einen geeigneten Kleber verbunden sind, vermieden. Zusätzlich weist der erfindungsgemäße Plattenwärmetauscher dadurch keine blinde, nicht- durchströmte Passage zwischen zwei benachbarten Modulen auf. Dies verbessert den thermischen Kontakt zwischen benachbarten Modulen deutlich. Dadurch werden thermische Spannungen minimiert und die Haltbarkeit des erfindungsgemäßen Plattenwärmetauschers erhöht. Die beiden Kontaktflächen werden erfindungsgemäß miteinander verklebt.

Gemäß einer ersten Ausgestaltung der Erfindung sind die Kontaktflächen derart miteinander verbunden, dass eine mechanische und wärmeleitende Verbindung zwischen zwei benachbarten Modulen entsteht, wobei mindestens ein Blechstreifen über Kleber mit dem Deckblech eines Moduls und über Kleber mit dem Deckblech eines benachbarten Moduls verbunden ist. In dieser bevorzugten Ausgestaltung werden die beiden Kontaktflächen der benachbarten Module eines erfindungsgemäßen Plattenwärmetauschers über Kleber und mindestens einem Blechstreifen miteinander verbunden. Durch den Lötprozess und die damit immer einhergehende ungleiche Verteilung und Aushärtung des Lötmaterials sind die Deckbleche, die ein Modul abschließen, selten vollständig eben. Dadurch ergeben sich bei der Verbindung der Deckbleche benachbarter Module Höhenunterschiede. Die Höhenunterschiede zwischen den Kontaktflächen zweier benachbarter Module können dieser Ausgestaltung der Erfindung dadurch ausgeglichen werden, dass mindestens ein Blechstreifen über Kleber mit dem Deckblech des einen Moduls und mit dem Deckblech des benachbarten Moduls verbunden ist. Die verwendeten schmalen Blechstreifen dienen dabei nicht nur zum Ausgleich der Höhenunterschiede. Zusätzlich verbessern sie den Wärmeleitkontakt zwischen zwei unmittelbar benachbarten Modulen. In dieser Ausgestaltung der Erfindung wird so eine mechanisch besonders stabile und wärmeleitende Verbindung zwischen den unmittelbar benachbarten Modulen erreicht.

In einer zweiten Ausgestaltung der Erfindung werden die Kontaktflächen derart miteinander verbunden, dass eine mechanische und wärmeleitende Verbindung zwischen zwei benachbarten Modulen entsteht, wobei mindestens ein Blechstreifen über Kleber mit dem Deckblech eines Moduls und mindestens einem Blechstreifen verbunden ist, der oder die mit dem Deckblech des benachbarten Moduls über Kleber verbunden ist/sind. In dieser alternativen Ausgestaltung der Erfindung werden die Kontaktflächen zweier unmittelbar benachbarter Module einzeln mit Blechstreifen bestückt. Die Blechstreifen werden dabei jeweils über einen geeigneten Kleber auf die Deckbleche aufgeklebt. Die Verbindung zwischen den Kontaktflächen zweier benachbarter Module erfolgt in dieser Ausgestaltung dadurch, dass die mit Kleber mit den Deckblechen verbundenen Blechstreifen mit den Blechstreifen des benachbarten Moduls verbunden werden. In dieser Ausgestaltung der Erfindung werden insbesondere mehrere Blechstreifen verwendet, wobei die Blechstreifen derart angeordnet sind, dass die Blechstreifen auf einer Kontaktfläche winklig zu den Blechstreifen der unmittelbar benachbarten Kontaktfläche sind. Die Blechstreifen können beispielsweise rechtwinklig zueinander angeordnet werden. Auch hier wird über die Vielzahl der Blechstreifen ein deutlich besserer Wärmekontakt zwischen benachbarten Modulen als im Stand der Technik erreicht.

Besonders bevorzugt weist eine Kontaktfläche mehrere, bevorzugt eine Vielzahl regelmäßig angeordneter Blechstreifen auf. Durch eine Vielzahl regelmäßig angeordneter Blechstreifen wird der Wärmekontakt durch die Wärmeleitfähigkeit der Blechstreifen zwischen benachbarten Modulen weiter verbessert.

In einer bevorzugten Ausgestaltung wird eine Vielzahl von Blechstreifen auf mindestens einer Kontaktfläche derart regelmäßig angeordnet, dass die gesamte Kontaktfläche spaltfrei von Blechstreifen ausgefüllt ist. Diese Ausgestaltung ist insbesondere für Plattenwärmetauscher geeignet, deren Anordnung einen besonders intensiven Wärmekontakt zwischen den Kontaktflächen benachbarter Module erfordert. Dies ist beispielsweise der Fall bei steilen Temperaturgradienten, starken Änderungen im Temperaturgradienten oder bei Ungleichverteilungen der am Wärmeaustausch teilnehmenden Medien (Fehlverteilung oder maldistribution). Derartige Zustände können oft bei bestimmten Verdampfungsvorgängen von zweiphasigen Gemischen oder Reinstoffen, bei asymmetrischer Passagenanordnung, nicht spezifizierten Betriebszuständen, Abschalt- oder Anfahrvorgängen auftreten.

In einer anderen bevorzugten Ausgestaltung der Erfindung wird eine Vielzahl von Blechstreifen auf mindestens einer Kontaktfläche derart regelmäßig und voneinander beabstandet angeordnet, dass die Blechstreifen über die gesamte Kontaktfläche gleichmäßig verteilt sind, wobei der Abstand zwischen zwei benachbarten Blechstreifen kleiner oder gleich der größeren Breite der jeweils benachbarten Blechstreifen ist. In dieser Ausgestaltung der Erfindung wird ein ähnlich guter Wärmeleitkontakt erreicht, wie in der Ausgestaltung, bei der die gesamte Kontaktfläche spaltfrei von Blechstreifen ausgefüllt ist. Jedoch wird hier eine deutlich geringere Zahl Blechstreifen benötigt.

Vorteilhafterweise weisen alle Blechstreifen einer Kontaktfläche die gleiche Breite auf. Dies erleichtert Einkauf, Konstruktion und Herstellung des erfindungsgemäßen Plattenwärmetauschers.

Ebenso zweckmäßig ist es, dass die Länge des/der Blechstreifen einer Kontaktfläche einer Seitenlänge der Kontaktfläche entsprechen. Die Dicke der Blechstreifen kann dabei vorteilhafterweise bei verschiedenen Kontaktflächen und/oder einer Kontaktfläche variieren. So können unterschiedliche Höhenunterschiede sowie Unebenheiten eines Deckbleches bzw. einer Kontaktfläche optimal ausgeglichen werden.

Vorteilhafterweise sind die Passagen der Module derart mit einer wellenförmigen Struktur (Fins) gefüllt, dass die wärmeaustauschenden Medien quer zur Wellenrichtung durch die Passagen strömen können. Dies verbessert den Wärmeaustausch zwischen zwei Medien in benachbarten Passagen.

Zweckmäßigerweise wird der Kleber je nach Einsatztemperatur und/oder Einsatzdruck des Plattenwärmetauschers gewählt.

Verfahrensseitig wird die gestellte Aufgabe durch die Merkmale des Anspruchs 9 gelöst.

Bei einem Plattenwärmetauscher gemäß der Erfindung wird die mechanische und thermische Verbindung zwischen zwei benachbarten Modulen deutlich gegenüber dem Stand der Technik verbessert. Der gesamte, aus mehreren Modulen bestehende Plattenwärmetauscherblock ist ein deutlich starreres und mechanisch stabileres Gebilde, als ein Plattenwärmetauscherblock mehrerer Module nach dem Stand der Technik. Zusätzlich weist ein erfindungsgemäßer Plattenwärmetauscher einen deutlich besseren Temperaturausgleich zwischen zwei benachbarten Modulen auf.

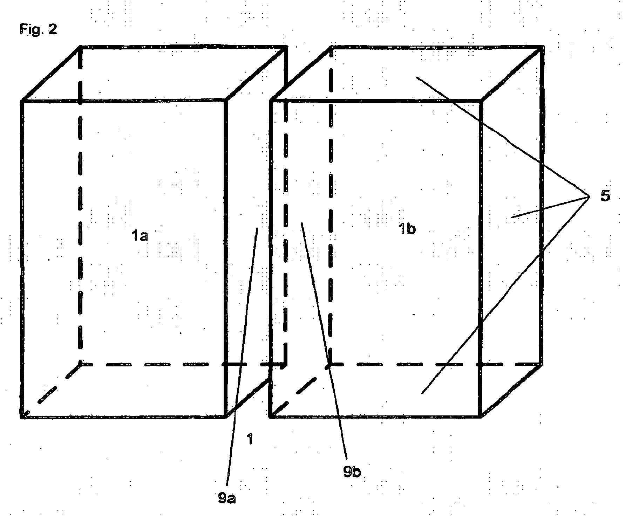

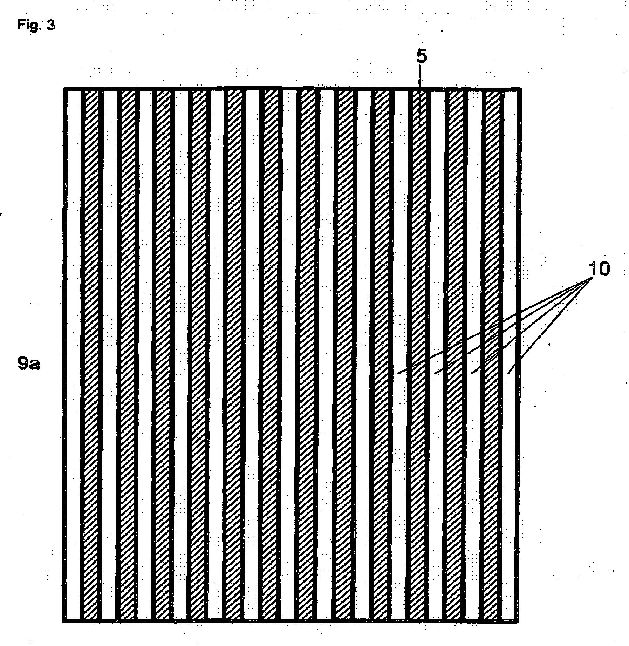

Im Folgenden soll die Erfindung anhand des in den Figuren 2 und 3 dargestellten Ausführungsbeispiels der Erfindung näher erläutert werden.

Die in der Figur 2 dargestellte Ausgestaltung eines erfindungsgemäßen Plattenwärmetauschers 1 besteht aus zwei Modulen 1a und 1b. Die beiden Module 1a und 1b sind quaderförmig und jeweils durch Deckbleche 5 nach außen abgeschlossen. Beide Module 1a und 1b werden derart angeordnet, dass jeweils gleich große Deckbleche 9a und 9b unmittelbar benachbart sind. Die beiden Deckbleche 9a und 9b bilden die Kontaktfläche zwischen den beiden Modulen 1a und 1b des Plattenwärmetauschers 1. Die beiden Kontaktflächen 9a und 9b werden über einen geeigneten Kleber miteinander verbunden.

Dies zeigt im Detail die Figur 3. In Figur 3 wird die Kontaktfläche 9a dargestellt. Das Deckblech 5 (schraffiert dargestellt) wird mit Kleber versehen. Über den Kleber werden eine Vielzahl von Blechstreifen 10 mit der Kontaktfläche 9a verbunden. Die Blechstreifen 10 weisen eine Länge auf, die mit der Kantenlänge des Deckbleches 9a übereinstimmt. Die Blechstreifen 10 werden derart regelmäßig auf dem Deckblech 9a angeordnet, dass der Spalt zwischen zwei Blechstreifen 10 der Breite des Blechstreifens 10 selbst entspricht. Zum Ausgleich von Höhenunterschieden können die einzelnen Blechstreifen jeweils eine verschiedene Dicke aufweisen.

Die derart mit Blechstreifen versehene Kontaktfläche 9a wird über den gleichen Kleber mit der Kontaktfläche 9b des Moduls 1b verbunden. Die beiden Module 1a und 1b werden somit mechanisch und wärmeleitend kraftschlüssig miteinander verbunden und bilden den gesamten Wärmetauscherblock des Plattenwärmetauschers 1.

Dieser gesamte Block wird anschließend mit den Stutzen und Headern zur Zu- bzw. Abführung, zum Verteilen und Sammeln der am Wärmeaustausch teilnehmenden Medien versehen. Die beiden Module 1a und 1b weisen dabei mindestens einen gemeinsamen Header auf (nicht dargestellt).

## Patentansprüche

1. Plattenwärmetauscher (1) bestehend aus mindestens zwei Modulen (1a, 1b),
• wobei jedes Modul (1a, 1b) eine Vielzahl stapelförmig angeordneter Passagen (3) aufweist, welche alternierend von wärmeaustauschenden Medien durchströmt werden können und durch Trennbleche (4) voneinander getrennt sind,
• die Module (1a, 1b) insgesamt quaderförmig sind und an den Außenseiten durch Deckbleche (5) begrenzt werden,
• die Module (1a, 1b) derart nebeneinander angeordnet sind, das eine rechteckige Seite (9a) eines quaderförmigen Moduls (1a) einer entsprechenden rechteckigen Seite (9b) eines anderen quaderförmigen Moduls (1b) unmittelbar benachbart ist,
• die Module Mittel (6) zur Zu- und Abführung der wärmeaustauschenden Medien (A, B, C, D, E) sowie Header (7) zum Verteilen und Sammeln der wärmeaustauschenden Medien (A, B, C, D, E) auf bzw. aus den einzelnen Passagen (3) aufweisen und
• wobei mindestens zwei Module (1a, 1b) mindestens einen gemeinsamen Header (7) aufweisen, **dadurch gekennzeichnet, dass**
• die beiden Deckbleche (5), die die jeweils unmittelbar benachbarten Seiten (9a, 9b) zweier benachbarter Module (1a, 1b) bilden, im Folgenden als Kontaktflächen (9a, 9b) bezeichnet, über einen geeigneten Kleber derart miteinander verbunden sind, dass eine mechanische und wärmeleitende Verbindung zwischen zwei benachbarten Modulen (1a, 1b) entsteht, wobei
(a) mindestens ein Blechstreifen (10) über Kleber mit dem Deckblech (5) eines Moduls (1a, 1b) und über Kleber mit dem Deckblech (5) des benachbarten Moduls (1a, 1b) verbunden ist, oder
(b) mindestens ein Blechstreifen (10) über Kleber mit dem Deckblech (5) eines Moduls (1a, 1b) und mindestens einen Blechstreifen (10) verbunden ist, der oder die mit dem Deckblech (5) des benachbarten Moduls (1a, 1b) über Kleber verbunden ist/sind.

2. Plattenwärmetauscher (1) nach Anspruch 1, **dadurch gekennzeichnet, dass** mindestens eine Kontaktfläche (9a, 9b) mehrere, bevorzugt eine Vielzahl, regelmäßig angeordneter Blechstreifen (10) aufweist.

3. Plattenwärmetauscher (1) nach einem der Ansprüche 1 oder 2, **dadurch gekennzeichnet, dass** eine Vielzahl von Blechstreifen (10) auf mindestens einer Kontaktfläche (9a, 9b) derart regelmäßig angeordnet wird, dass die gesamte Kontaktfläche (9a, 9b) spaltfrei von Blechstreifen (10) ausgefüllt ist.

4. Plattenwärmetauscher (1) nach einem der Ansprüche 1 bis 2, **dadurch gekennzeichnet, dass** eine Vielzahl von Blechstreifen (10) auf mindestens einer Kontaktfläche (9a, 9b) derart regelmäßig und voneinander beabstandet angeordnet wird, dass die Blechstreifen (10) über die gesamte Kontaktfläche (9a, 9b) gleichmäßig verteilt sind, wobei der Abstand zwischen zwei benachbarten Blechstreifen (10) kleiner oder gleich der größeren Breite der jeweils benachbarten Blechstreifen (10) ist.

5. Plattenwärmetauscher (1) nach einem der Ansprüche 1 bis 4, **dadurch gekennzeichnet, dass** alle Blechstreifen (10) einer Kontaktfläche (9a, 9b) die gleiche Breite aufweisen.

6. Plattenwärmetauscher (1) nach einem der Ansprüche 1 bis 5, **dadurch gekennzeichnet, dass** die Länge des/der Blechstreifen (10) einer Kontaktfläche (9a, 9b) einer Seitenlänge der Kontaktfläche entspricht.

7. Plattenwärmetauscher (1) nach einem der Ansprüche 1 bis 6, **dadurch gekennzeichnet, dass** die Dicke der Blechstreifen (10) verschiedener Kontaktflächen (9a, 9b) variiert und/oder die Dicke der Blechstreifen (10) einer Kontaktfläche (9a, 9b) variiert.

8. Plattenwärmetauscher (1) nach einem der Ansprüche 1 bis 7, **dadurch gekennzeichnet, dass** die Passagen der Module derart mit einer wellenförmigen Struktur (Fins) gefüllt sind, dass die wärmeaustauschenden Medien quer zur Wellenrichtung durch die Passagen strömen können.

9. Verfahren zur Herstellung eines Plattenwärmetauschers (1) gemäß dem Oberbegriff des Anspruches 1, **dadurch gekennzeichnet, dass** das Deckblech (5) mindestens eines Moduls (1a, 1b) mit einem geeigneten Kleber mit dem Deckblech (5) eines anderen Moduls (1a, 1b) verbunden wird, sodass eine mechanische und wärmeleitende Verbindung zwischen zwei benachbarten Modulen (1a, 1b) entsteht, wobei die beiden Deckbleche (5), die jeweils unmittelbar benachbarten Seiten (9a, 9b) zweier benachbarter Module (1a, 1b) bilden, im Folgenden als Kontaktflächen (9a, 9b) bezeichnet, über
(a) mindestens ein Blechstreifen (10) über Kleber mit dem Deckblech (5) eines Moduls (1a, 1b) und über Kleber mit dem Deckblech (5) des benachbarten Moduls (1a, 1b) verbunden werden, oder
(b) mindestens ein Blechstreifen (10) über Kleber mit dem Deckblech (5) eines Moduls (1a, 1b) und mindestens einen Blechstreifen (10) verbunden ist, der oder die mit dem Deckblech (5) des benachbarten Moduls (1a, 1b) über Kleber verbunden ist/sind.

## Claims

1. Plate heat exchanger (1), consisting of at least two modules (1a, 1b),
• each module (1a, 1b) having a multiplicity of passages (3) arranged in stack form, through which heat-exchanging media can flow alternately and which are separated from one another by separating sheets (4),
• the modules (1a, 1b) being overall parallelepipedal and being delimited on the outsides by cover sheets (5),
• the modules (1a, 1b) being arranged next to one another in such a way that a right-angled side (9a) of one parallelepipedal module (1a) is directly adjacent to a corresponding right-angled side (9b) of another parallelepipedal module (1b),
• the modules having means (6) for the supply and discharge of the heat-exchanging media (A, B, C, D, E) and header (7) for the distribution and collection of the heat-exchanging media (A, B, C, D, E) respectively to and from the individual passages (3), and
• at least two modules (1a, 1b) having at least one common (7) header, **characterized in that**
• the two cover sheets (5) which form the in each case directly adjacent sides (9a, 9b) of two adjacent modules (1a, 1b), being designated below as contact faces (9a, 9b), are connected to one another via a suitable adhesive in such a way that a mechanical and heat-conducting connection is made between two adjacent modules (1a, 1b), wherein
(a) at least one sheet metal strip (10) being connected via adhesive to the cover sheet (5) of one module (1a, 1b) and being connected via adhesive to the cover sheet (5) of the adjacent module (1a, 1b), or
(b) at least one sheet metal strip (10) being connected via adhesive to the cover sheet (5) of one module (1a, 1b) and at least one sheet metal strip (10), which sheet metal strip or sheet metal strips is or are connected to the cover sheet (5) of the adjacent module (1a, 1b) via adhesive.

2. Plate heat exchanger (1) according to Claim 1, **characterized in that** at least one contact face (9a, 9b) has a plurality of, preferably a multiplicity of, regularly arranged sheet metal strips (10).

3. Plate heat exchanger (1) according to one of Claims 1 or 2, **characterized in that** a multiplicity of sheet metal strips (10) are regularly arranged on at least one contact face (9a, 9b) in such a way that the entire contact face (9a, 9b) is filled, gap-free, with sheet metal strips (10).

4. Plate heat exchanger (1) according to one of Claims 1 to 2, **characterized in that** a multiplicity of sheet metal strips (10) are regularly arranged, spaced apart from one another, on at least one contact face (9a, 9b), in such a way that the sheet metal strips (10) are distributed uniformly over the entire contact face (9a, 9b), the spacing between two adjacent sheet metal strips (10) being smaller than or equal to the greater width of the in each case adjacent sheet metal strips (10).

5. Plate heat exchanger (1) according to one of Claims 1 to 4, **characterized in that** all the sheet metal strips (10) of a contact face (9a, 9b) have the same width.

6. Plate heat exchanger (1) according to one of Claims 1 to 5, **characterized in that** the length of the sheet metal strip or sheet metal strips (10) of a contact face (9a, 9b) corresponds to a side length of the contact face.

7. Plate heat exchanger (1) according to one of Claims 1 to 6, **characterized in that** the thickness of the sheet metal strips (10) of various contact faces (9a, 9b) varies and/or the thickness of the sheet metal strips (10) of one contact face (9a, 9b) varies.

8. Plate heat exchanger (1) according to one of Claims 1 to 7, **characterized in that** the passages of the modules are filled with a wavy structure (fins) in such a way that the heat-exchanging media can flow through the passages transversely to the wave direction.

9. Method for the production of a plate heat exchanger (1) according to the precharacterizing clause of Claim 1, **characterized in that** the cover sheet (5) of at least one module (1a, 1b) is connected by means of a suitable adhesive to the cover sheet (5) of another module (1a, 1b) in such a way that a mechanical and heat-conducting connection is made between two adjacent modules (1a, 1b), wherein the cover sheets (5) which form the in each case directly adjacent sides (9a, 9b) of two adjacent modules (1a, 1b), being designated below as contact faces (9a, 9b), are being connected by means of
(a) at least one sheet metal strip (10) via adhesive to the cover sheet (5) of one module (1a, 1b) and are being connected via adhesive to the cover sheet (5) of the adjacent module (1a, 1b), or
(b) at least one sheet metal strip (10) via adhesive to the cover sheet (5) of one module (1a, 1b) and at least one sheet metal strip (10), which sheet metal strip or sheet metal strips is or are connected to the cover sheet (5) of the adjacent module (1a, 1b) via adhesive.

## Revendications

1. Échangeur de chaleur à plaques (1) constitué d'au moins deux modules (1a, 1b),
- chaque module (1a, 1b) présentant une pluralité de passages (3) disposés en pile, qui peuvent être parcourus en alternance par des milieux échangeurs de chaleur et qui sont séparés les uns des autres par des tôles de séparation (4),
- les modules (1a, 1b) étant dans l'ensemble parallélépipédiques et étant limités au niveau des côtés extérieurs par des tôles de recouvrement (5),
- les modules (1a, 1b) étant disposés les uns à côté des autres de telle sorte qu'un côté rectangulaire (9a) d'un module parallélépipédique (1a) soit immédiatement adjacent à un côté rectangulaire correspondant (9b) d'un autre module parallélépipédique (1b),
- les modules présentant des moyens (6) pour l'alimentation et l'évacuation des milieux échangeurs de chaleur (A, B, C, D, E) ainsi que des moyens (7) (collecteur) pour distribuer et recueillir les milieux échangeurs de chaleur (A, B, C, D, E) sur ou depuis les passages individuels (3), et
- au moins deux modules (1a, 1b) présentant au moins un collecteur commun (7), **caractérisé en ce que**
- les deux tôles de recouvrement (5) qui forment les côtés à chaque fois immédiatement adjacents (9a, 9b) de deux modules adjacents (1a, 1b), désignés ci-après par surfaces de contact (9a, 9b), sont connectées l'une à l'autre par le biais d'un adhésif approprié de telle sorte qu'une connexion mécanique et thermoconductrice entre deux modules adjacents (1a, 1b) soit obtenue,
(a) au moins une bande de tôle (10) étant connectée par le biais d'un adhésif à la tôle de recouvrement (5) d'un module (1a, 1b) et étant connectée par le biais d'un adhésif à la tôle de recouvrement (5) du module adjacent (1a, 1b), ou
(b) au moins une bande de tôle (10) étant connectée par le biais d'un adhésif à la tôle de recouvrement (5) d'un module (1a, 1b) et à au moins une bande de tôle (10) qui est/sont connectée (s) par le biais d'un adhésif à la tôle de recouvrement (5) du module adjacent (1a, 1b).

2. Échangeur de chaleur à plaques (1) selon la revendication 1, **caractérisé en ce qu'**au moins une surface de contact (9a, 9b) présente plusieurs, de préférence une pluralité, de bandes de tôle (10) disposées régulièrement.

3. Échangeur de chaleur à plaques (1) selon l'une quelconque des revendications 1 ou 2, **caractérisé en ce qu'**une pluralité de bandes de tôle (10) sont disposées régulièrement sur au moins une surface de contact (9a, 9b) de telle sorte que toute la surface de contact (9a, 9b) soit remplie sans interstices par des bandes de tôle (10).

4. Échangeur de chaleur à plaques (1) selon l'une quelconque des revendications 1 à 2, **caractérisé en ce qu'**une pluralité de bandes de tôle (10) sont disposées de manière régulière et espacée les unes des autres sur au moins une surface de contact (9a, 9b) de telle sorte que les bandes de tôle (10) soient réparties uniformément sur toute la surface de contact (9a, 9b), la distance entre deux bandes de tôle adjacentes (10) étant inférieure ou égale à la plus grande largeur des bandes de tôle adjacentes respectives (10).

5. Échangeur de chaleur à plaques (1) selon l'une quelconque des revendications 1 à 4, **caractérisé en ce que** toutes les bandes de tôle (10) d'une surface de contact (9a, 9b) présentent la même largeur.

6. Échangeur de chaleur à plaques (1) selon l'une quelconque des revendications 1 à 5, **caractérisé en ce que** la longueur de la ou des bandes de tôle (10) d'une surface de contact (9a, 9b) correspond à une longueur latérale de la surface de contact.

7. Échangeur de chaleur à plaques (1) selon l'une quelconque des revendications 1 à 6, **caractérisé en ce que** l'épaisseur des bandes de tôle (10) de différentes surfaces de contact (9a, 9b) varie et/ou l'épaisseur des bandes de tôle (10) d'une surface de contact (9a, 9b) varie.

8. Échangeur de chaleur à plaques (1) selon l'une quelconque des revendications 1 à 7, **caractérisé en ce que** les passages des modules sont remplis d'une structure ondulée (ailettes), de telle sorte que les milieux échangeurs de chaleur puissent s'écouler transversalement à la direction d'ondulation à travers les passages.

9. Procédé de fabrication d'un échangeur de chaleur à plaques (1) selon le préambule de la revendication 1, **caractérisé en ce que** la tôle de recouvrement (5) d'au moins un module (1a, 1b) est connectée au moyen d'un adhésif approprié à la tôle de recouvrement (5) d'un autre module (1a, 1b) de telle sorte qu'une connexion mécanique et thermoconductrice entre deux modules adjacents (1a, 1b) soit obtenue, les tôles de recouvrement (5) qui forment les côtés à chaque fois immédiatement adjacents (9a, 9b) de deux modules adjacents (1a, 1b), désignés ci-après par surfaces de contact (9a, 9b), étant connectée par
(a) au moins une bande de tôle (10) par le biais d'un adhésif à la tôle de recouvrement (5) d'un module (1a, 1b) et étant connectée par le biais d'un adhésif à la tôle de recouvrement (5) du module adjacent (1a, 1b), ou
(b) au moins une bande de tôle (10) par le biais d'un adhésif à la tôle de recouvrement (5) d'un module (1a, 1b) et à au moins une bande de tôle (10) qui est/sont connectée(s) par le biais d'un adhésif à la tôle de recouvrement (5) du module adjacent (1a, 1b).
